# EUROPEAN PATENT SPECIFICATION

(11) **EP 4 383 029 B1**
(45) Date of publication and mention of the grant of the patent: **04.11.2026**
(21) Application number: 22212150.1
(22) Date of filing: 08.12.2022
(51) Int. Cl.: G05B 19/418, G05B 17/02

(54) **LINKING A REAL OBJECT WITH A DIGITAL TWIN ASSIGNED TO THE REAL OBJECT**
VERKNÜPFUNG EINES REALEN OBJEKTS MIT EINEM DEM REALEN OBJEKT ZUGEORDNETEN DIGITALEN ZWILLINGS
LIAISON D'UN OBJET RÉEL AVEC UN JUMEAU NUMÉRIQUE ATTRIBUÉ À L'OBJET RÉEL

(43) Date of publication of application: 12.06.2024
(73) Proprietor: Siemens Aktiengesellschaft, 80333 München (DE)
(72) Inventor: Blenk, Andreas, 86916 Kaufering (DE); Eppler, Manuel, 72768 Reutlingen (DE); Zeiger, Florian, 85635 Höhenkirchen-Siegertsbrunn (DE)
(74) Representative: Siemens Patent Attorneys

(56) References cited:
- CN-A- 115 220 406
- US-A1- 2009 089 233
- US-A1- 2020 218 243

## Description

The invention relates to a method according to claim 1.

The invention relates further to a monitoring network controller according to claim 13.

Digital twins are used in a lot of operation services, such as design, testing, maintenance, surveillance, failure prediction, training and the like. A digital twin of a physical system or real object, respectively, may be implemented such that one or more sensors sense values of one or more designated parameters of the real object. The digital twin module may receive data associated with the sensors and, for at least a selected portion of the real object, monitor a condition of the selected portion of the real object or the twinned physical system, respectively, and/or may access a remaining useful life of the selected portion based at least in part on the sensed values of the one or more designated parameters. A respective method and apparatus are, for instance, disclosed by US 2017/0286572 A1.

U.S. Patent Application US2020218243A1 discloses a method for controlling an intelligent workshop. It involves three main steps: first, building a simulation platform for control; second, setting up a mechanism to execute tasks in parallel; and third, improving and fine-tuning the control system. The system includes a Manufacturing Execution System (MES) module that sends production instructions, unit management modules that convert these instructions into machine commands and send them to Programmable Logic Controllers (PLCs) via a network, a network module that connects all parts of the system, and a Supervisory Control and Data Acquisition (SCADA) module for monitoring and control.

U.S. Patent Application US2009089233A1 discloses a method for linking different types of synchronized data from internal sources, such as industrial unit history, and external sources, such as network traffic. It includes a component that predicts outcomes of industrial processes and helps with diagnostics and adjustments, ensuring tight control and quick responses to changes.

Chinese Patent Application CN115220406A relates to the field of digital twinning technologies, and to a high-frequency data acquisition method. It involves receiving data requests, sending variable values based on the type of request (real-time, periodic, or event-based), and using a server to manage these requests efficiently. The disclosed approach avoids frequent access to the underlying system and improves data collection efficiency.

Due to the application and the use of digital twins in many technical fields, more and more real components or real objects, respectively, are digitalized, and digital counterparts such as digital twins are created. A further example is a digital twin of a network leading to the creation of digital network twins.

In order to have, preferably always, a realistic digital copy or digital twin, respectively, of the real object, a continuous data exchange between the digital twin and the object module assigned to the real object is necessary. This data exchange should be fast, reliable and secure. However, the operation and the control of a communication network connecting the digital twin with the real object has been not sufficiently considered up to date. The real object that is supposed to be twinned, may be a physical system having physical parameters such as dimensions or the like. The physical system may also be a dynamic system which may include movements, radiation, hydro-dynamic effects and/or the like. For example, the physical system may be a turbine for use in an airplane, a robot, for example, used in a production line, a complete production line of an industrial process, and/or the like.

Existing approaches are based on an undisturbed information or data exchange and data gathering between the real object and the digital twin or the digital representation, respectively. In case of disturbed data transmission in the communication network affecting the communication between the object module and the digital twin module, multiple problems may appear and, especially, may not be detected and may eventually remain unsolved. For instance, the behaviour of the digital twin assigned to a real object may occasionally drift apart from the operation of the real object. The current status of the real object and the current status of the digital twin at a specific time may differ from each other.

In the state of the art, the monitoring loses status information. The digital twin cannot update or refresh its status. Especially, when receiving the next monitoring information, the status cannot be updated. The update may not be possible based on the current status of the digital twin module, for example, due to physical constraints and laws or the like.

It is the object of the invention, to improve the reliability of refreshing or updating, respectively, the digital twin and/or the real object.

As a solution, a method, a monitoring network controller, and an apparatus according to the independent claims are proposed.

Preferable embodiments can be derived from the features of the dependant claims.

With regard to a generic method, it is especially proposed that the method comprises monitoring a transmission of the refresh data via the communication network, and, dependent on detecting a predefined error pattern related to transmission of the refresh data, determining countermeasure data designed to trigger a countermeasure and transmitting the countermeasure data at least to the object module or the digital twin module.

With regard to the monitoring network controller, it is proposed that monitoring network controller is configured to be in communication with an object module connected with a real object, wherein the object module is configured to provide object data specifying a current status of the real object and/or to adapt the status of the real object based on input data received by the object module, and in communication via a communication network with a digital twin module configured to store twin data specifying a current status of the digital twin, wherein refresh data, depending on the object data, is sent by the object module to the digital twin module via the communication network, the refresh data is received by the digital twin module, and the digital twin module refreshes the twin data dependent on the received refresh data, and/or wherein refresh data, depending on the twin data, is sent by the digital twin module to the object module via the communication network, the refresh data is received by the object module as the input data, and the object module adapts the status of the real object dependent on the received refresh data, wherein the monitoring network controller is configured to monitor transmission of the refresh data via the communication network, and, dependent on detecting a predefined error pattern related to transmission of the refresh data, determine countermeasure data designed to trigger a countermeasure and transmit the countermeasure data at least to the object module or the digital twin module.

With regard to a generic apparatus, it is proposed, that the apparatus is further configured to monitor a transmission of the refresh data via the communication network, and, dependent on detecting a predefined error pattern related to transmission of the refresh data, determine countermeasure data designed to trigger a countermeasure and transmit the countermeasure data at least to the object module or the digital twin module.

Generally, the invention enhances or enables a reliable operation of the digital twin with the real object, even in case of network problems within the communication network connecting the object module with the digital twin module. This may be a specific advantage, especially, as an extension or expansion, respectively, of a digital twin with regard to a large scale system, as the real object may lead to geographic distances between the real system and the digital twin providing the digital representation of the real object. The invention proposes the provision of network control for the communication network connecting object module with the digital twin module. Especially, the real object may involve machines, communication networks themselves, and/or the like.

The monitoring network controller is preferably installed to configure, monitor, and control the communication network connecting the digital twin and the object module. Preferably, the monitoring network controller may have three interfaces, namely an interface to the digital twin operator, which may be a human operator, an interface to the digital twin, and an interface to the communication network connecting the digital twin module with the object module. Thus an improved operation performance of the system or apparatus, respectively, that relies on continuous real-time information exchange between digital twin and the real object, can be improved.

Linking the real object with the digital twin preferably comprises especially synchronizing, coordinating, and/or the like. Preferably, the current status of the real object and the current status of the digital twin are at least at predefined time points substantially the same. Preferably the current statuses and/or amendments with respect to the current statuses of the real object and the digital twin depend on each other. Preferably, the current status of the digital twin represents the current status of the real object and vice versa.

The object module and the digital twin module as well may be represented by a software or separate hardware modules as well. Also a combination may be possible. The object data and the digital twin data as well may represent physical parameters such as dimensions, velocities, pressures, and/or the like. Preferably, the object data may comprise one or more sensor data which are provided by respective sensors detecting specific dimensions of the real object. Also preferably, the digital twin data may comprise data which may represent the real object. Insofar, the twin data may comprise more information than the object data.

The refresh data may be data which can, on the one hand, depend on the object data, or, on the other hand, may depend on the twin data. Especially, the refresh data corresponds to data which indicates an amendment of a current status of the object data or the twin data, respectively. The refresh data may comprise data which allows amending the object data or the twin data, respectively, in order to make the current statuses of the real object and the digital twin matching each other. However, the refresh data may also comprise partially or complete object data or twin data, respectively.

Monitoring the transmission comprises monitoring the operation of the communication network, especially receiving status information from a control module of the communication network. Moreover, monitoring may also comprise sensing operational statuses of the communication network, in order to enable detecting of the predefined error pattern which is a loss of data. The predefined error pattern may also comprise an error signal provided from the communication network, especially its controller if applicable.

Dependent on detecting the predefined error pattern related to the transmission of the refresh data, countermeasure data are determined. Preferably, the countermeasure data are determined by the monitoring network controller. The countermeasure data comprise information how the error pattern can be handled. Especially, the countermeasure data are designed to trigger a countermeasure. The countermeasure comprises at least a portion of the refresh data, especially, such refresh data which were lost during transmission, the countermeasure may also comprise a signal data only, signalling that the predefined error pattern has been detected.

Upon receiving the countermeasure data, the object module or the digital twin module, respectively, may proceed its operation so that the refresh process can be continued without a warning or a failure detection. This is why the operation of the complete system can be continued. The countermeasure also allows detecting of the configuration of the communication network, the operation of the object module, and/or operation of the digital twin module so that the predefined error pattern detection can be avoided. The countermeasure data is transmitted at least to the object module or the digital twin module, respectively. Preferably, the countermeasure data is transmitted to the module, sending the refresh data. However, alternatively or additionally, the countermeasure data may be sent to the module, receiving the refresh data.

According to a preferred exemplary embodiment, the object module comprises a production operator console and a production network connected with the real object, wherein the production operator console and the production network are in communication with each other, wherein the production operator console sends first configuration data to the production network, and wherein the production operator console sends a digital twin operation intent to the monitoring network controller. The production operator console allows controlling a production process, preferably by an operator, which can affect the production network and its components, such as, for instance, machines, workpieces, and/or the like, which are preferably linked with the real object. The production operator console may provide an interface to allow the operator receiving specific information about the digital twin and the real object as well as inputting control commands affecting the real object and/or the digital twin as well.

The production network may comprise a production communication network which may be connected with production facilities such as machines, sensors, combinations thereof, the real object itself, and/or the like. The production operator console is configured to send a first configuration data to the production network so that the production network can be configured with regard to the real object and/or its intent use. Moreover, the production operator console sends a digital twin operation intent to the monitoring network controller. In this regard, the monitoring network controller can receive information about the intent of the operator to use the digital twin linked with the real object. The monitoring network controller can provide respective configuration so that operation of the digital twin linked with the real object can be achieved.

According to another exemplary embodiment, it is proposed that, in response to receiving the digital twin operation intent, the monitoring network controller sends a request for network demands for operation of the digital twin to a digital twin demands database. The digital twin demands database comprise data, preferably, which is useful for controlling and/or adjusting the communication network and/or the object module and/or the digital twin module, in order to establish a specific reliable operation, especially with regard to the communication between the object module and the digital twin module. The digital twin demands database may be a separate database which can be in communication with the monitoring network controller. However, the digital twin demands database may be at least partially comprised by the communication network, the monitoring network controller, the digital twin database, and/or the object module. The digital demand database preferably comprises information related to data streams between the object module and the digital twin module. For example, the information may relate to adjustments of the communication network and the like.

According to another exemplary embodiment, it is proposed that, in response to receiving the request for network demands for operation of the digital twin, the digital twin demands database returns network demand data to the monitoring network controller. So, the information about the demands for reliable operation of the digital twin with regard to the real object is present at the monitoring network controller.

According to another exemplary embodiment, it is proposed that the monitoring network controller sends network configuring data to the communication network in order to enable error-less operation of the digital twin. The communication network may comprise one or more specific instances, which may receive the network configuring data so that respective adjustments within the communication network can be realised. Based on such adjustments, a substantially error-less operation of the digital twin with regard to the real object can be achieved.

According to a preferred exemplary embodiment, the network configuring data is sent in response to receiving the network demand data. In this regard, especially, the monitoring network controller may send the configuring data to the communication network, the object module, and/or the digital twin module if applicable or necessary, respectively.

Moreover, it is proposed that, in response to receiving the network demand data, the monitoring network controller sends a start signal to the production operator console indicating that the digital twin is ready for being operated synchronous with the real object. In this regard, the production operator console may receive and indicate that the digital twin is ready for being operated linked with the real object. In this regard, the production operator console may automatically activate operation. However, the production operator console may also present the start signal at the interface to the operator or user, respectively, so that the operator can start operation by inputting an input command. Upon receiving the input command, the production operator console may start operation.

According to another preferred exemplary embodiment, it is proposed that operation is started by a start signal of the production operator console transmitted to the production network. In this regard, it is not necessary that the operator needs to interact with the production operator console. However, if desired, interaction by the operator can be allowed.

Moreover, it is proposed that, in response to the production network receiving the start signal, the production network sends the refresh data to the digital twin module, in order to refresh the digital twin data. In this regard, an automatic process of refresh or updating can be achieved. The refresh process can be repeated as often as necessary. This allows automatically linking the digital twin with the real object.

According to another exemplary embodiment, it is proposed that, upon receiving the countermeasure data, the production operator console determines failure data and sends the failure data to the production network. The failure data can include the indication of a failure only. However, the failure data can also include status data related to the failure and/or the current status of the digital twin in order to allow adjusting the production network correspondingly. Therefore, the production network, production devices, and/or the like which may be included by the production network, can proceed their operation, whereby considering the failure data. In this regard, it is possible that a stop of the production network can be avoided.

According to another exemplary embodiment, this proposed that the monitoring network controller transmits the detected predefined error pattern to the production network. In this regard, the monitoring network controller can directly affect the production network. And additional interaction with the production operator console can be avoided.

According to another exemplary embodiment, this proposed that the predefined error pattern related to transmission of the refresh data is detected by the communication network, wherein the communication network determines error pattern data and transmits the error pattern data to the monitoring network controller. In this regard, especially, instances of the communication network may monitor the communication between the object module and the digital twin module and, if the predefined error pattern is detected, a respective message, such as the error pattern data is transmitted to the monitoring network controller. In this regard, the operation of the monitoring network controller can be simplified.

According to yet another exemplary embodiment, it is proposed that the predefined error pattern related to transmission of the refresh data is detected by the monitoring network controller, wherein the monitoring network controller determines the error pattern data and transmits the error pattern data to the communication network. In this regard, the control operation can be established by the monitoring network controller, wherein the communication network on the other side receive the error pattern data so that counter measures can be provided by the communication network, specially, its instances.

In applications or situations which might be possible but which are not specified specifically, it may be provided that a failure signal and/or a request for inputting a user confirmation can be output and/or a standard configuration and/or a predefined initial status can be suspended.

The teaching of the present invention can be readily understood and at least some additional specific details will appear by considering the following detailed description of some exemplary embodiment in conjunction with the accompanying drawings. In the drawings, same reference characters correspond to same components and functions. In the drawings, it is shown:
- FIG 1: a signalling diagram indicating signalling between an object module and a digital twin module via a communication network, wherein the object module comprises a production operation console and a production network including respective devices;
- FIG 2: a schematic block diagram of an apparatus comprising the object module and the digital twin module being in communication via the communication network, wherein the communication is monitored and controlled via a monitoring network controller;
- FIG 3: a schematic signalling diagram such as detailed according to FIG 1, wherein additionally the monitoring network controller and a digital twin data base are included, wherein a situation is indicated without interference of the communication; and
- FIG 4: a schematic signalling diagram such as FIG 3, wherein an error during the communication appeared.

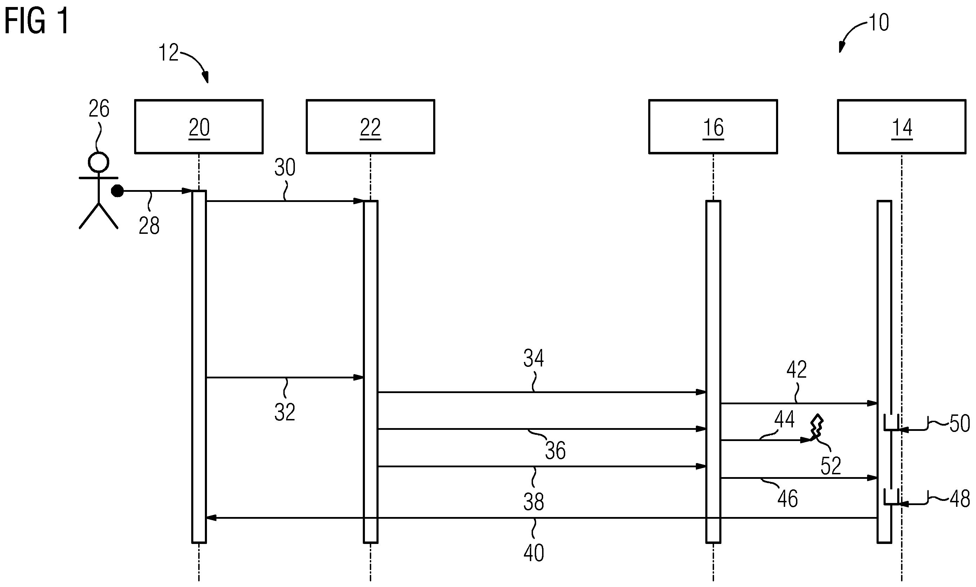

FIG 1 shows according to an exemplary embodiment a schematic signalling diagram of an apparatus 10, wherein a production line, which is represented in FIG 1 by a production network 22, is used to produce or work on a real object. The production network 22 may comprise for example a robot as a real object. The apparatus 10 comprises further a digital twin module 14, having twin data describing a digital twin linked with the real object. Consequently, a digital twin corresponds to the robot forming the real object.

As can be seen from FIG 1, the apparatus 10 is provided for forming a respective system comprising an object module 12, in turn comprising a production operator console 20 and the production network 22 connected with the real object. The production operator console 20 and the production network 22 are in communication with each other and form the object module 12. The object module 12 and the digital twin module 14 are communicatively linked via a communication network 16. The production operator console 20 may provide an interface for outputting information to an operator 26 or for receiving input 28 from the operator 26.

The production operator console 20 sends first configuration data 30 to the production network 22 related to a specific operation of the production network 22 and respective production devices included by the production network 22 affecting the real object. The first configuration data 30 leads to a specific configuration of the production network 22 with regard to the real object.

Moreover, the production operator console 20 sends a signal "start operation" 32 to the production network 22 in order to start operation of the production network 22.

The production network 22 starts operation and sends a first monitoring information 34 as a refresh data to the monitoring network 16. The monitoring network 16 forwards the first monitoring information 34 as a first forward monitoring information 42 to the digital twin module 14. Upon receiving the first forward monitoring information 42, the digital twin module 14 refreshes or updates the current status of the digital twin in an refresh step 50.

The production network 22 proceeds operation and sends a second monitoring information 36 as another refresh data to the monitoring network 16. The communication network 16 tries to forward the second monitoring information 36 as a second forward monitoring information 44, respectively, to the digital twin module 14. However, transmission failed at 52. Consequently, the digital twin module 14 does not receive the second forward monitoring information 44. Consequently, the communication network 16 fails to send a respective refresh step.

The production network 22 proceeds its operation and sends a third monitoring information 38 as another refresh data to the monitoring network 16. The monitoring network 16 transmits a respective third forward monitoring information 46 to the digital twin module 14. At 48, the digital twin module 14 tries to refresh the current state according to the third forward monitoring information 46. However, the refresh step at 48 of the current status of the digital twin failed because the current status stored in the digital twin module 14 does not allow the refresh being possible.

In response to failing the refresh step 48, the digital twin module 14 sends an error signal 40 to the production operator console 20 that the third monitoring information 38 causes an error which is not resolvable. Consequently, the production operator console 20 sends a stop signal "not indicated in the figures" to the production network 22 in order to stop its operation.

The before mentioned scenario has the disadvantage that linking the real object with the digital twin during operation cannot be maintained. This can be cumbersome and dangerous.

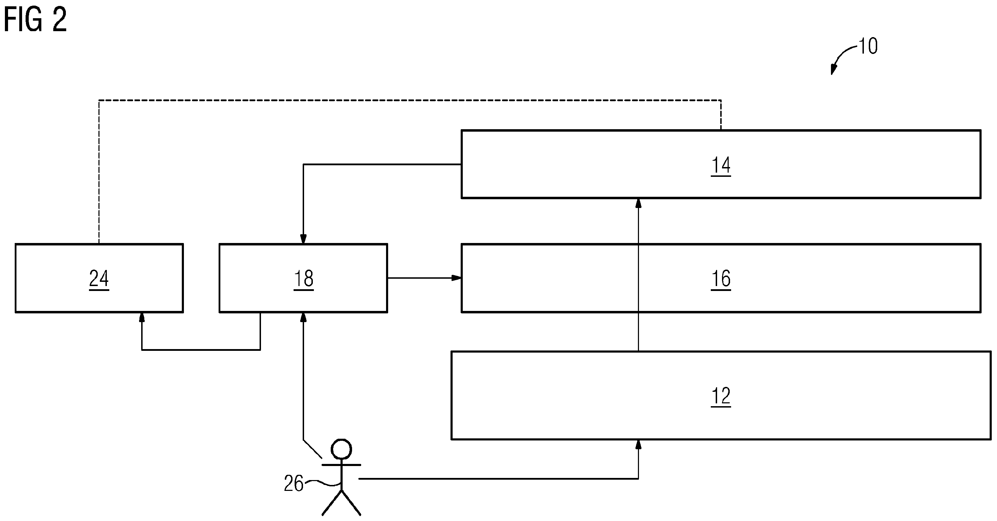

FIG 2 shows an exemplary embodiment of an apparatus 10, which is capable of reducing the before-mentioned disadvantages with regard to the apparatus 10 according to FIG 1. The apparatus 10 according to FIG 2 is based on the apparatus 10 according to FIG 1, which is why it is additionally referred to the before-mentioned description.

As can be seen from FIG 2, an apparatus 10 for linking the real object with the digital twin assigned to the real object is provided. The object module 12 is connected with the real object and is configured to provide object data specifying a current status of the real object and/or to adapt the status of the real object based on input data received by the object module 12. Moreover, twin data specifying the status of the digital twin are stored in the digital twin module 14.

The apparatus 10 is configured to cause the object module 12 to send refresh data, depending on the object data, to the digital twin module 14 via a communication network 16, cause the digital twin module 14 to receive the refresh data, and cause the digital twin module 14 to refresh the twin data dependent on the received refresh data. Additionally or alternatively, the apparatus 10 is configured to cause the digital twin module 14 to send refresh data, depending on the twin data, to the object module 12 via the communication network 16, cause the object module 12 to receive the refresh data as the input data, and cause the object module 12 to adapt the status of the real object dependent on the received refresh data.

The apparatus 10 is further configured to monitor a transmission of the refresh data via the communication network 16, and, dependent on detecting a predefined error pattern related to transmission of the refresh data, determine countermeasure data designed to trigger a countermeasure and transmit the countermeasure data at least to the object module 12 or the digital twin module 14.

Upon receiving the countermeasure data, the production operator console 20 determines failure data and sends the failure data to the production network 22.

The proposed mechanism according to the apparatus 10 of FIG 2 basically relies on two subsystems. One of the subsystems creates and uses portable instances of processes and communication networks for an end-to-end behaviour analysis considering process statuses, network statuses and/or the like which is already detailed with regard to FIG 1. Especially, a first subsystem describes to feed in real physical behaviour data, such as for instance of sensors, applications, surfaces and/or the like, into the digital twin module 14 to then observe the effects of the production network 22 or the object module 12 and describes a result overall system behaviour.

The second subsystem provides substantially two interfaces so that the intended process operation can be described and the behaviour of the digital twin can be monitored. Based on this information, the second subsystem implements a network control that configures, monitors, and/or controls the communication network 16 connecting the real object and the digital twin. Moreover, monitoring of the communication network 16 may be either part of an infrastructure such as in-band network, or it can be realized via an out-band network, it can be such as a dedicated network component connecting the real component and modules, respectively, with the platform hosting of the digital twin or the digital twin module 14, respectively.

The communication network 16 is preferably a dedicated network for connecting a platform hosting digital representations with a platform hosting real objects and the network connecting the real objects. This component can be realized with different technologies, such as, for instance, a time-sensitive networking equipment. Also, different implementation approaches are possible. One first possibility is directed to a case in which a physically separated communication network is available which is exclusively used for communication between the digital twin as the digital representation, on one hand, and the real object as the real-world entity, on the other hand. According to a second approach, where a dedicated communication network is not available, all data communication between the digital representation and its real-world entity can use virtual networks or slices, respectively of other networks, such as production networks, communication networks and the like. A third approach, especially in large-scale infrastructures, can be provided as a mixed approach with different segments according to the first and the second approach.

As can be seen from FIG 2, a monitoring network controller 18 is provided, which is capable for monitoring the communication network 16. The monitoring network controller 18 may preferably be responsible for configuring, monitoring and controlling the network, especially the communication network 16, connecting the platforms where a digital twin is hosted, such as, for instance, cloud infrastructures or dedicated data centre infrastructures, or servers connected with the real object, for instance, a field level network and its interconnecting communication network.

A further component according to the apparatus 10 of FIG 2 is an interface between the monitoring network controller 18 and the digital twin module 14. The monitoring network controller 18 preferably receives data from the digital twin module 14 as the digital twin platform via this interface. The data preferably contains status information about the quality of the operation of the digital twin, or it contains events created by the digital twin module 14. Such events may inform the monitoring network controller 18, for instance, about current alerts, with regard to a digital twin operation or the like. In order to create alerts, the digital twin module 14 may use a system performance characteristics module (SPC) in order to match a current digital twin behaviour, which might be affected due to monitoring data loss, with the intended digital twin operation.

Moreover, an interface between the monitoring network controller 18 and the object module 12 is provided. Especially, this interface can be used for connecting a real object operator. The real object operator, for instance, the operator 26 or programmable logic controllers (PLC) can use this interface to describe the desired intent of the operation of the digital twin. Relying on an intent-based networking concept, the operator 26 is free in its way to specify a reliable and efficient operation of its operational infrastructure.

Moreover, one component of the apparatus according to FIG 2 is a digital twin network demands specification 24. The digital twin network demands specification 24 may contain preferably a predefined specification of network demands necessary for the digital twin operation. Such specification may include a description of network resources that are needed to achieve a potential level of confidence in the current operation of the digital twin and the like.

Regarding the before-mentioned components of the apparatus 10 of FIG 2, a reliable and efficient operation of the digital twin in dependence on the data available from the real object can be achieved. In particular, the operation of the digital twin can substantially rely on the perceived data from the real object. In case where such data may be lost, the operator 26 needs to decrease the level of confidence in how and what the digital twin currently represents as the real world.

Although the invention is only described with regard to one real object and one digital twin linked thereto, the invention is not limited hereon. There may to be also two or more digital twins which may be linked to one or more real objects.

Generally the current operation of the digital twin can substantially rely on exchanged data with the object module 12. For instance, in order to have a digital twin with a status close-to-reality, a high constant data rate might be required. Accordingly, the monitoring network controller 18 needs to take positions that a data rate sufficiently high can be guaranteed on the communication network 16. Another option might be the loss of monitoring or the delayed transmission of monitoring data. In both cases, the monitoring network controller 18 communicates a decrease in confidence to the operator 26 or take countermeasure within the communication network 16, in order to improve the situation, id est, measures to avoid delay and/or drop of monitoring data.

In the case of scarce resources, the monitoring network controller 18 may be responsible for finding suitable configurations for the communication network 16 and for taking control actions, in order to achieve the highest possible level of operation performance. If a reliable operation of the digital twin cannot be guaranteed, the monitoring network controller 18 informs the operator 26 of the real object. The operator 26 may be responsible for taking actions in order to avoid harm of operation of the real object and possible involved human actors.

Considering the before mentioned components, an intent of the operator 26 related to a real object can be translated into a network configuration and control. Moreover, the operator 26 is enabled to differentiate between failures related to operation due to configuration and mistakes related to operation within the real object, and failures related to the digital twin due to missing or status monitoring information. Hence the operator 26 can increase the confidence in the operation of its virtual representation or digital twin, respectively, and, consequently, take decisions based on virtual representation or digital twin, respectively.

With regard to the FIG 2 through 4, the operation of the monitoring network controller 18 is further detailed. Generally, the monitoring network controller 18 is configured to fetch configurations with regard to the digital twin and to configure the communication network 16 accordingly. With such configuration, data loss or data delay can be avoided or at least minimized.

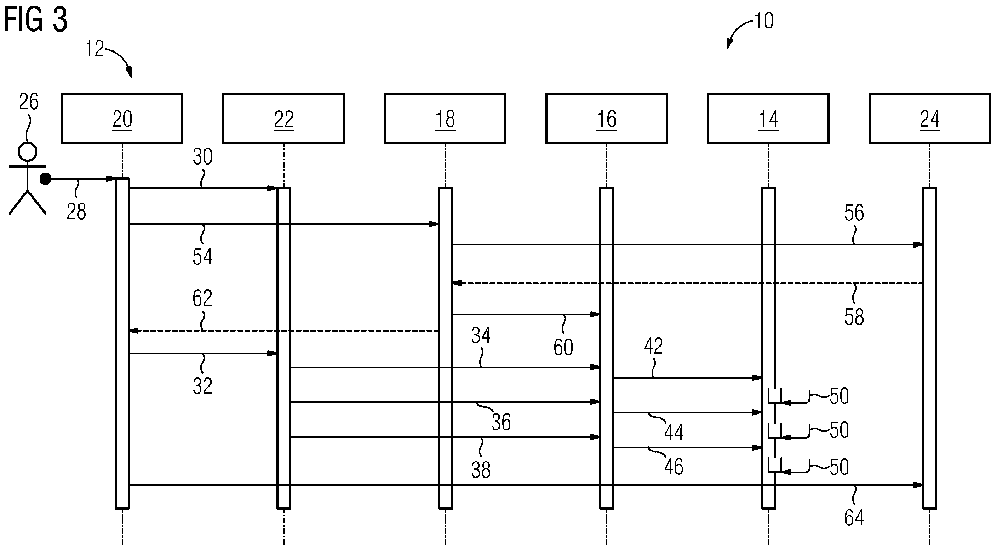

The operation can be seen from FIG 3 with regard to FIG 1. As can be seen from FIG 3, before sending a start operation 32, and after sending configuration data 30 to the production network 22, the operator 26 sends a digital twin operation intent 54 to the monitoring network controller 18. The monitoring network controller 18 sends, in response to receiving the digital twin operation intent 54, a request 56 for network demands for the digital twin to the digital twin monitoring data specification 24. In response to receiving this request, the digital twin monitoring data specification 24 determines the required network demands for the digital twin and returns the network demands by a response 58. The response 58 is transmitted from the digital twin monitoring data specification 24 to the monitoring network controller 18.

Considering the network demands for the digital twin, the monitoring network controller 18 sends configuration data 60 to the communication network 16. The communication network 16, in response hereto, configures itself correspondingly.

Thereafter, the monitoring network controller 18 sends a start ready signal 62 to the production operator console 20. In response hereto, the production operator console 20 can send the start signal 32 to the production network 22 in order to start operation.

If no failure or data confusion appears as shown according to FIG 3, the operation proceeds as detailed with regard to FIG 1. Consequently, the production operator console 20 can use the digital twin for predication, maintenance, monitoring and/or the like according to request 64.

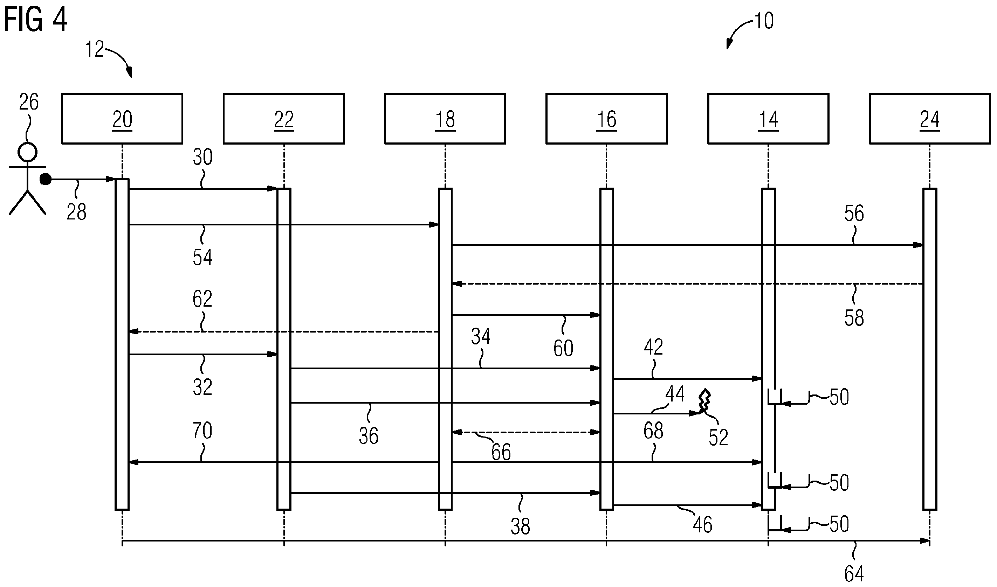

However, if the communication during the communication network 16 fails at 52 as discussed with regard to FIG 1, the communication network 16 provides a network error detected signal 66 to the monitoring network controller 18 or vice versa. The monitoring network controller 18 provides countermeasures as discussed above sending countermeasure data 70 the production operator console 20 and countermeasure data 68 to the digital twin module 14. This allows refreshing the status of the digital twin module 14 as previously desired. Consequently, when the next monitoring information data 38 is sent, the respective forward data 46 is received by the digital twin module 14, the refresh of the current status of the digital twin can be provided without failure. This is shown according to FIG 4.

Summarized, the present invention allows enhancing the reliability of operation of a digital twin linked with a real object.

The invention allows achieving the follow advantages at least partially
- Operators are enabled to differentiate between errors happening from real object configuration and operation mistakes, and errors due to delayed or lost monitoring information.
- "Unexpected" behaviour of digital representations can easily be explained either by real world effects on the physical entities, or by synchronization and updating delays of the digital representations due to the separation of the communication domains, especially real-world devices to real-world devices and real-world devices to digital representations.
- Failure detection and cost efficient and secure failure management.
- An adaptive system that provides operation guarantees to enable a flexible twin deployment.
- Confidence in the operation of digital twins, which rely on real-time data extracted at runtime from physical systems/real objects.

The before mentioned description of preferred embodiments serves only for presenting the invention in more detail. However, the preferred embodiments are not supposed to limit the scope of the claims.

## Claims

1. A method for linking a real object with a digital twin assigned to the real object, wherein an object module (12) is connected with the real object and is configured to provide object data specifying a current status of the real object and to adapt the status of the real object based on input data received by the object module (12), and wherein twin data specifying a current status of the digital twin are stored in a digital twin module (14), wherein
- refresh data (34, 36, 38), depending on the object data, is sent by the object module (12) to the digital twin module (14) via a communication network (16),
- the refresh data (34, 36, 38) is received by the digital twin module (14), and
- the digital twin module (14) refreshes the twin data dependent on the received refresh data (34, 36, 38),
- refresh data (34, 36, 38), depending on the twin data, is sent by the digital twin module (14) to the object module (12) via the communication network (16),
- the refresh data (34, 36, 38) is received by the object module (12) as the input data, and
- the object module (12) adapts the status of the real object dependent on the received refresh data (34, 36, 38), **characterized by**
- monitoring a transmission of the refresh data (34, 36, 38) via the communication network (16),
- dependent on detecting a predefined error pattern related to transmission of the refresh data (34, 36, 38), determining countermeasure data (68, 70) designed to trigger a countermeasure and transmitting the countermeasure data (68, 70) at least to the object module (12) or the digital twin module (14), and,
- wherein the predefined error pattern is a loss of data and wherein the countermeasure data comprises at least a portion of the refresh data which were lost during the transmission.

2. The method according to claim 1, **characterized in that** the object module (12) comprises a production operator console (20) and a production network (22) connected with the real object, wherein the production operator console (20) and the production network (22) are in communication with each other, wherein the production operator console (20) sends first configuration data (30) to the production network (22), and wherein the production operator console (20) sends a digital twin operation intent (54) to the monitoring network controller (18).

3. The method according to claim 2, **characterized in that**, in response to receiving the digital twin operation intent (54), the monitoring network controller (18) sends a request (56) for network demands for operation of the digital twin to a digital twin demands database (24).

4. The method according to claim 3, **characterized in that**, in response to receiving the request (56) for network demands for operation of the digital twin, the digital twin demands database (24) returns (58) network demand data to the monitoring network controller (18).

5. The method according to any one of the preceding claims, **characterized in that** the monitoring network controller (18) sends network configuring data (60) to the communication network (16) in response to receiving the network demand data.

6. The method according to claim 5, **characterized in that**, in response to receiving the network demand data, the monitoring network controller (18) sends a start signal (62) to the production operator console (20) indicating that the digital twin is ready for being operated synchronous with the real object.

7. The method according to any one of the preceding claims 2 through 6, **characterized in that** operation is started by a start signal (32) of the production operator console (20) transmitted to the production network (22).

8. The method according to claim 7, **characterized in that**, in response to the production network (22) receiving the start signal (32), the production network (22) sends the refresh data (34, 36, 38) to the digital twin module (14) in order to refresh the digital twin data.

9. The method according to any one of the preceding claims 2 through 8, **characterized in that**, upon receiving the countermeasure data, the production operator console (20) determines failure data and sends the failure data to the production network (22).

10. The method according to any one of the preceding claims 2 through 9, **characterized in that** the monitoring network controller (18) transmits the detected predefined error pattern to the production network (22).

11. The method according to any one of the preceding claims, **characterized in that** the predefined error pattern related to transmission of the refresh data (34, 36, 38) is detected by the communication network (16), wherein the communication network (16) determines error pattern data and transmits the error pattern data to the monitoring network controller (18).

12. The method according to any one of the preceding claims, **characterized in that** the predefined error pattern related to transmission of the refresh data (34, 36, 38) is detected by the monitoring network controller (18), wherein the monitoring network controller (18) determines the error pattern data and transmits the error pattern data to the communication network (16).

13. A monitoring network controller (18) configured to be in communication with an object module (12) connected with a real object,
wherein the object module (12) is configured to provide object data specifying a current status of the real object and to adapt the status of the real object based on input data received by the object module (12), and in communication via a communication network (16) with a digital twin module (14) configured to store twin data specifying a current status of the digital twin,
wherein refresh data (34, 36, 38), depending on the object data, is sent by the object module (12) to the digital twin module (14) via the communication network (16), the refresh data (34, 36, 38) is received by the digital twin module (14), and the digital twin module (14) refreshes the twin data dependent on the received refresh data (34, 36, 38), wherein refresh data, depending on the twin data, is sent by the digital twin module (14) to the object module (12) via the communication network (16), the refresh data (34, 36, 38) is received by the object module (12) as the input data, and the object module (12) adapts the status of the real object dependent on the received refresh data (34, 36, 38), and,
the monitoring network controller being **characterised in that** the monitoring network controller (18) is configured to
- monitor transmission of the refresh data via the communication network (16),
- dependent on detecting a predefined error pattern related to transmission of the refresh data (34, 36, 38), determine countermeasure data (68, 70) designed to trigger a countermeasure and transmit the countermeasure data (68, 70) at least to the object module (12) or the digital twin module (14), and,
- wherein the predefined error pattern is a loss of data and wherein the countermeasure data comprises at least a portion of the refresh data which were lost during the transmission.

## Patentansprüche

1. Verfahren zum Verknüpfen eines realen Objekts mit einem dem realen Objekt zugeordneten digitalen Zwilling, wobei ein Objektmodul (12) mit dem realen Objekt verbunden und so konfiguriert ist, dass es Objektdaten bereitstellt, die einen aktuellen Status des realen Objekts angeben, und den Status des realen Objekts auf der Grundlage von vom Objektmodul (12) empfangenen Eingabedaten anpasst und wobei Zwillingsdaten, die einen aktuellen Status des digitalen Zwillings angeben, in einem Digitaler-Zwilling-Modul (14) gespeichert sind, wobei
- in Abhängigkeit von den Objektdaten Aktualisierungsdaten (34, 36, 38) von dem Objektmodul (12) über ein Kommunikationsnetzwerk (16) zum Digitaler-Zwilling-Modul (14) gesendet werden,
- die Aktualisierungsdaten (34, 36, 38) von dem Digitaler-Zwilling-Modul (14) empfangen werden und
- das Digitaler-Zwilling-Modul (14) die Zwillingsdaten in Abhängigkeit von den empfangenen Aktualisierungsdaten (34, 36, 38) aktualisiert,
- in Abhängigkeit von den Zwillingsdaten die Aktualisierungsdaten (34, 36, 38) von dem Digitaler-Zwilling-Modul (14) über das Kommunikationsnetzwerk (16) zum Objektmodul (12) gesendet werden,
- die Aktualisierungsdaten (34, 36, 38) von dem Objektmodul (12) als Eingabedaten empfangen werden und
- das Objektmodul (12) den Status des realen Objekts in Abhängigkeit von den empfangenen Aktualisierungsdaten (34, 36, 38) anpasst,
**gekennzeichnet durch**
- Überwachen einer Übertragung der Aktualisierungsdaten (34, 36, 38) über das Kommunikationsnetzwerk (16),
- in Abhängigkeit vom Erkennen eines vorgegebenen Fehlermusters in Bezug auf eine Übertragung der Aktualisierungsdaten (34, 36, 38) Bestimmen von Gegenmaßnahmedaten (68, 70), die so gestaltet sind, dass sie eine Gegenmaßnahme auslösen, und Übertragen der Gegenmaßnahmedaten (68, 70) zumindest zum Objektmodul (12) oder zum Digitaler-Zwilling-Modul (14), und
- wobei es sich bei dem vorgegebenen Fehlermuster um einen Datenverlust handelt und die Gegenmaßnahmedaten zumindest einen Teil der Aktualisierungsdaten umfassen, die bei der Übertragung verloren gegangen sind.

2. Verfahren nach Anspruch 1, **dadurch gekennzeichnet, dass** das Objektmodul (12) eine Bedienerkonsole (20) für die Produktion und ein mit dem realen Objekt verbundenes Produktionsnetzwerk (22) umfasst, wobei die Bedienerkonsole (20) für die Produktion und das Produktionsnetzwerk (22) miteinander kommunizieren, wobei die Bedienerkonsole (20) für die Produktion erste Konfigurationsdaten (30) zum Produktionsnetzwerk (22) und eine Digitaler-Zwilling-Einsatzabsicht (54) zur Netzwerküberwachungssteuereinheit (18) sendet.

3. Verfahren nach Anspruch 2, **dadurch gekennzeichnet, dass** die Netzwerküberwachungssteuereinheit (18) als Reaktion auf das Empfangen der Digitaler-Zwilling-Einsatzabsicht (54) eine Anfrage (56) zu Netzwerkanforderungen bei einem Einsatz des digitalen Zwillings an eine Digitaler-Zwilling-Anforderungen-Datenbank (24) sendet.

4. Verfahren nach Anspruch 3, **dadurch gekennzeichnet, dass** die Digitaler-Zwilling-Anforderungen-Datenbank (24) als Reaktion auf das Empfangen der Anfrage (56) zu Netzwerkanforderungen bei einem Einsatz des digitalen Zwillings Netzwerkanforderungsdaten zur Netzwerküberwachungssteuereinheit (18) zurücksendet (58).

5. Verfahren nach einem der vorhergehenden Ansprüche, **dadurch gekennzeichnet, dass** die Netzwerküberwachungssteuereinheit (18) als Reaktion auf das Empfangen der Netzwerkanforderungsdaten Netzwerkkonfigurationsdaten (60) zum Kommunikationsnetzwerk (16) sendet.

6. Verfahren nach Anspruch 5, **dadurch gekennzeichnet, dass** die Netzwerküberwachungssteuereinheit (18) als Reaktion auf das Empfangen der Netzwerkanforderungsdaten ein Startsignal (62) zur Bedienerkonsole (20) für die Produktion sendet, das angibt, dass der digitale Zwilling für den gleichzeitigen Einsatz mit dem realen Objekt bereitsteht.

7. Verfahren nach einem der vorhergehenden Ansprüche 2 bis 6, **dadurch gekennzeichnet, dass** der Einsatz durch ein Startsignal (32) der Bedienerkonsole (20) für die Produktion gestartet wird, das zum Produktionsnetzwerk (22) übertragen wird.

8. Verfahren nach Anspruch 7, **dadurch gekennzeichnet, dass** das Produktionsnetzwerk (22) als Reaktion darauf, dass es das Startsignal (32) empfängt, die Aktualisierungsdaten (34, 36, 38) zum Digitaler-Zwilling-Modul (14) sendet, damit die Daten des digitalen Zwillings aktualisiert werden können.

9. Verfahren nach einem der vorhergehenden Ansprüche 2 bis 8, **dadurch gekennzeichnet, dass** die Bedienerkonsole (20) für die Produktion nach Empfangen der Gegenmaßnahmedaten Ausfalldaten bestimmt und diese zum Produktionsnetzwerk (22) sendet.

10. Verfahren nach einem der vorhergehenden Ansprüche 2 bis 9, **dadurch gekennzeichnet, dass** die Netzwerküberwachungssteuereinheit (18) das erkannte vorgegebene Fehlermuster zum Produktionsnetzwerk (22) überträgt.

11. Verfahren nach einem der vorhergehenden Ansprüche, **dadurch gekennzeichnet, dass** das vorgegebene Fehlermuster bezüglich der Übertragung der Aktualisierungsdaten (34, 36, 38) vom Kommunikationsnetzwerk (16) erkannt wird, wobei das Kommunikationsnetzwerk (16) Fehlermusterdaten bestimmt und diese zur Netzwerküberwachungssteuereinheit (18) überträgt.

12. Verfahren nach einem der vorhergehenden Ansprüche, **dadurch gekennzeichnet, dass** das vorgegebene Fehlermuster bezüglich der Übertragung der Aktualisierungsdaten (34, 36, 38) von der Netzwerküberwachungssteuereinheit (18) erkannt wird, wobei die Netzwerküberwachungssteuereinheit (18) die Fehlermusterdaten bestimmt und diese zum Kommunikationsnetzwerk (16) überträgt.

13. Netzwerküberwachungssteuereinheit (18), die so konfiguriert ist, dass sie mit einem Objektmodul (12) kommuniziert, das mit einem realen Objekt verbunden ist,
wobei das Objektmodul (12) so konfiguriert ist, dass es Objektdaten bereitstellt, die einen aktuellen Status des realen Objekts angeben, und den Status des realen Objekts auf der Grundlage von vom Objektmodul (12) empfangenen Eingabedaten anpasst und über ein Kommunikationsnetzwerk (16) mit einem Digitaler-Zwilling-Modul (14) kommuniziert, das so konfiguriert ist, dass es Zwillingsdaten speichert, die einen aktuellen Status des digitalen Zwillings angeben,
wobei in Abhängigkeit von den Objektdaten Aktualisierungsdaten (34, 36, 38) von dem Objektmodul (12) über das Kommunikationsnetzwerk (16) zum Digitaler-Zwilling-Modul (14) gesendet werden, die Aktualisierungsdaten (34, 36, 38) von dem Digitaler-Zwilling-Modul (14) empfangen werden und das Digitaler-Zwilling-Modul (14) die Zwillingsdaten in Abhängigkeit von den empfangenen Aktualisierungsdaten (34, 36, 38) aktualisiert,
wobei in Abhängigkeit von den Zwillingsdaten Aktualisierungsdaten von dem Digitaler-Zwilling-Modul (14) über das Kommunikationsnetzwerk (16) zum Objektmodul (12) gesendet werden, die Aktualisierungsdaten (34, 36, 38) von dem Objektmodul (12) als Eingabedaten empfangen werden und das Objektmodul (12) den Status des realen Objekts in Abhängigkeit von den empfangenen Aktualisierungsdaten (34, 36, 38) anpasst, und
die Netzwerküberwachungssteuereinheit (18) **dadurch gekennzeichnet ist, dass** sie so konfiguriert ist, dass sie
- eine Übertragung der Aktualisierungsdaten über das Kommunikationsnetzwerk (16) überwacht,
- in Abhängigkeit vom Erkennen eines vorgegebenen Fehlermusters in Bezug auf eine Übertragung der Aktualisierungsdaten (34, 36, 38) Gegenmaßnahmedaten (68, 70) bestimmt, die so gestaltet sind, dass sie eine Gegenmaßnahme auslösen, und die Gegenmaßnahmedaten (68, 70) zumindest zum Objektmodul (12) oder zum Digitaler-Zwilling-Modul (14) überträgt, und
- wobei es sich bei dem vorgegebenen Fehlermuster um einen Datenverlust handelt und die Gegenmaßnahmedaten zumindest einen Teil der Aktualisierungsdaten umfassen, die bei der Übertragung verloren gegangen sind.

## Revendications

1. Procédé pour la liaison d'un objet réel à un jumeau numérique attribué à l'objet réel, dans lequel un module d'objet (12) est connecté à l'objet réel et est configuré pour fournir des données d'objet spécifiant un statut actuel de l'objet réel et pour adapter le statut de l'objet réel sur la base de données d'entrée reçues par le module d'objet (12), et dans lequel des données de jumeau spécifiant un statut actuel du jumeau numérique sont stockées dans un module de jumeau numérique (14), dans lequel
- des données de rafraîchissement (34, 36, 38), qui dépendent des données d'objet, sont envoyées par le module d'objet (12) au module de jumeau numérique (14) par l'intermédiaire d'un réseau de communication (16),
- les données de rafraîchissement (34, 36, 38) sont reçues par le module de jumeau numérique (14), et
- le module de jumeau numérique (14) rafraîchit les données de jumeau en fonction des données de rafraîchissement (34, 36, 38) reçues,
- des données de rafraîchissement (34, 36, 38), qui dépendent des données de jumeau, sont envoyées par le module de jumeau numérique (14) au module d'objet (12) par l'intermédiaire du réseau de communication (16),
- les données de rafraîchissement (34, 36, 38) sont reçues par le module d'objet (12) comme données d'entrée, et
- le module d'objet (12) adapte le statut de l'objet réel en fonction des données de rafraîchissement (34, 36, 38) reçues, **caractérisé par**
- la surveillance d'une émission des données de rafraîchissement (34, 36, 38) par l'intermédiaire du réseau de communication (16),
- en fonction de la détection d'un motif d'erreur prédéfini relatif à l'émission des données de rafraîchissement (34, 36, 38), la détermination de données de contre-mesure (68, 70) conçues pour déclencher une contre-mesure et l'émission des données de contre-mesure (68, 70) au moins vers le module d'objet (12) ou le module de jumeau numérique (14), et,
- dans lequel le motif d'erreur prédéfini est une perte de données et dans lequel les données de contre-mesure comprennent au moins une partie des données de rafraîchissement qui ont été perdues pendant l'émission.

2. Procédé selon la revendication 1, **caractérisé en ce que** le module d'objet (12) comprend une console d'opérateur de production (20) et un réseau de production (22) connectés à l'objet réel, dans lequel la console d'opérateur de production (20) et le réseau de production (22) sont en communication l'un avec l'autre, dans lequel la console d'opérateur de production (20) envoie des premières données de configuration (30) au réseau de production (22), et dans lequel la console d'opérateur de production (20) envoie une intention d'exploitation de jumeau numérique (54) au contrôleur de réseau de surveillance (18).

3. Procédé selon la revendication 2, **caractérisé en ce que**, en réponse à la réception de l'intention d'exploitation de jumeau numérique (54), le contrôleur de réseau de surveillance (18) envoie une requête (56) pour des demandes de réseau pour une exploitation du jumeau numérique à une base de données de demandes de jumeau numérique (24).

4. Procédé selon la revendication 3, **caractérisé en ce que**, en réponse à la réception de la requête (56) pour des demandes de réseau pour une exploitation du jumeau numérique, la base de données de demandes de jumeau numérique (24) renvoie (58) des données de demande de réseau au contrôleur de réseau de surveillance (18).

5. Procédé selon l'une quelconque des revendications précédentes, **caractérisé en ce que** le contrôleur de réseau de surveillance (18) envoie des données de configuration de réseau (60) au réseau de communication (16) en réponse à la réception des données de demande de réseau.

6. Procédé selon la revendication 5, **caractérisé en ce que**, en réponse à la réception des données de demande de réseau, le contrôleur de réseau de surveillance (18) envoie un signal de démarrage (62) à la console d'opérateur de production (20) indiquant que le jumeau numérique est prêt à être exploité de manière synchrone avec l'objet réel.

7. Procédé selon l'une quelconque des revendications 2 à 6 précédentes, **caractérisé en ce que** l'exploitation est démarrée par un signal de démarrage (32) de la console d'opérateur de production (20) émis vers le réseau de production (22).

8. Procédé selon la revendication 7, **caractérisé en ce que**, en réponse au fait que le réseau de production (22) reçoit le signal de démarrage (32), le réseau de production (22) envoie les données de rafraîchissement (34, 36, 38) au module de jumeau numérique (14) afin de rafraîchir les données de jumeau numérique.

9. Procédé selon l'une quelconque des revendications 2 à 8 précédentes, **caractérisé en ce que**, lors de la réception des données de contre-mesure, la console d'opérateur de production (20) détermine des données de défaillance et envoie les données de défaillance au réseau de production (22).

10. Procédé selon l'une quelconque des revendications 2 à 9 précédentes, **caractérisé en ce que** le contrôleur de réseau de surveillance (18) émet le motif d'erreur prédéfini détecté vers le réseau de production (22).

11. Procédé selon l'une quelconque des revendications précédentes, **caractérisé en ce que** le motif d'erreur prédéfini relatif à l'émission des données de rafraîchissement (34, 36, 38) est détecté par le réseau de communication (16), dans lequel le réseau de communication (16) détermine des données de motif d'erreur et émet les données de motif d'erreur vers le contrôleur de réseau de surveillance (18).

12. Procédé selon l'une quelconque des revendications précédentes, **caractérisé en ce que** le motif d'erreur prédéfini relatif à l'émission des données de rafraîchissement (34, 36, 38) est détecté par le contrôleur de réseau de surveillance (18), dans lequel le contrôleur de réseau de surveillance (18) détermine les données de motif d'erreur et émet les données de motif d'erreur vers le réseau de communication (16).

13. Contrôleur de réseau de surveillance (18) configuré pour être en communication avec un module d'objet (12) connecté à un objet réel,
dans lequel le module d'objet (12) est configuré pour fournir des données d'objet spécifiant un statut actuel de l'objet réel et pour adapter le statut de l'objet réel sur la base de données d'entrée reçues par le module d'objet (12), et en communication par l'intermédiaire d'un réseau de communication (16) avec un module de jumeau numérique (14) configuré
pour stocker des données de jumeau spécifiant un statut actuel du jumeau numérique,
dans lequel des données de rafraîchissement (34, 36, 38), qui dépendent des données d'objet, sont envoyées par le module d'objet (12) au module de jumeau numérique (14) par l'intermédiaire du réseau de communication (16), les données de rafraîchissement (34, 36, 38) sont reçues par le module de jumeau numérique (14), et le module de jumeau numérique (14) rafraîchit les données de jumeau en fonction des données de rafraîchissement (34, 36, 38) reçues,
dans lequel des données de rafraîchissement, qui dépendent des données de jumeau, sont envoyées par le module de jumeau numérique (14) au module d'objet (12) par l'intermédiaire du réseau de communication (16), les données de rafraîchissement (34, 36, 38) sont reçues par le module d'objet (12) comme données d'entrée, et le module d'objet (12) adapte le statut de l'objet réel en fonction des données de rafraîchissement (34, 36, 38) reçues, et,
le contrôleur de réseau de surveillance étant **caractérisé en ce que** le contrôleur de réseau de surveillance (18) est configuré pour
- surveiller une émission des données de rafraîchissement par l'intermédiaire du réseau de communication (16),
- en fonction de la détection d'un motif d'erreur prédéfini relatif à l'émission des données de rafraîchissement (34, 36, 38), déterminer des données de contre-mesure (68, 70) conçues pour déclencher une contre-mesure et émettre les données de contre-mesure (68, 70) au moins vers le module d'objet (12) ou le module de jumeau numérique (14), et,
- dans lequel le motif d'erreur prédéfini est une perte de données et dans lequel les données de contre-mesure comprennent au moins une partie des données de rafraîchissement qui ont été perdues pendant l'émission.
